**Europäisches Patentamt**

**European Patent Office**

**Office européen des brevets**

(19)

(11) Veröffentlichungsnummer: **0 353 422 B1**

(12) **EUROPÄISCHE PATENTSCHRIFT**

(45) Veröffentlichungstag der Patentschrift: **25.11.92**

(51) Int. Cl.⁵: **B01D 61/00**, A01J 11/10

(21) Anmeldenummer: **89110413.5**

(22) Anmeldetag: **08.06.89**

(54) **Filtrationsverfahren und Filtrationseinrichtung.**

(30) Priorität: **09.06.88 DE 3819704**

(43) Veröffentlichungstag der Anmeldung:
**07.02.90 Patentblatt 90/06**

(45) Bekanntmachung des Hinweises auf die
Patenterteilung:
**25.11.92 Patentblatt 92/48**

(84) Benannte Vertragsstaaten:
**AT BE CH DE ES FR GB IT LI SE**

(56) Entgegenhaltungen:
EP-A- 0 122 439         WO-A-88/02651
DE-A- 3 700 804         FR-A- 2 261 018
GB-A- 1 451 747         GB-A- 1 492 090

(73) Patentinhaber: **KRAFT GENERAL FOODS R & D, Inc. Zweigniederlassung München Zweigniederlassung der "Kraft General Foods R & D, Inc." mit dem Sitz in Wilmington, Delaware, USA Postfach 83 05 50 Unterbiberger Strasse 15**
**W-8000 München 83(DE)**

(72) Erfinder: **Nassauer, Joseph, Dr.-Ing.**
**Gartenstrasse 1**
**W-8051 Langenbach(DE)**
Erfinder: **Anbarci, Ahmet, Dr.-Ing.**
**Johann-Strass-Strasse 4**
**W-8025 Unterhaching(DE)**

(74) Vertreter: **Weickmann, Heinrich, Dipl.-Ing. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

# Beschreibung

Die Erfindung betrifft ein Filtrationsverfahren, bei dem eine der Filtration zu unterwerfende, gelöste, suspendierte oder emulgierte Bestandteile enthaltende Flüssigkeit zwischen einer Konzentratseitigen Pumpe und einem Konzentratseitigen Gegendruckventil durch eine Konzentratseitige Strömungsstrecke entlang der Konzentratseite des Filters mindestens einer Filtereinheit bewegt wird und zwischen dieser Konzentratseite des Filters und der anderen Seite d.h. der Permeatseite des Filters eine Transfilterdruckdifferenz aufrechterhalten wird, so daß während des Vorbeigangs der zu filtrierenden Flüssigkeit an der Konzentratseite des Filters ein Teil der Flüssigkeit als Permeat durch den Filter hindurchtritt und wenigstens ein Teil der gelösten, suspendierten oder emulgierten Bestandteile an der Konzentratseite des Filters abgelagert wird. Ein solches Filtrationsverfahren ist aus der GB-A-1 451 747 bekannt.

Über die Art der zu verwendenden Pumpe ist in dieser GB-A-1 451 747 keine Aussage gemacht. Es ist aber üblich, daß man bei solchen Filtrationsverfahren, jedenfalls dann, wenn die Viskosität der zu fördernden Flüssigkeit die Verwendung einer Kreiselpumpe gestattet, eine Kreiselpumpe auch tatsächlich verwendet, da sich eine Kreiselpumpe aufgrund ihres einfachen Aufbaus und ihrer geringen Gestehungskosten anbietet.

Mit zunehmender Betriebszeit lagern sich in zunehmendem Maße gelöste, suspendierte oder emulgierte Bestandteile an der beströmten Konzentratseite des Filters ab. Dadurch erhöht sich der Durchtrittswiderstand des Filters.

Die Pumpe wird daher mit zunehmender Betriebsdauer austrittsseitig mit einem höheren Gegendruck beaufschlagt. Wegen der besonderen Charakteristik von Kreiselpumpen bedeutet dies, daß die Fördermenge auf der beströmten Konzentratseite des Filters abfällt. Wegen der dann geringeren Strömungsgeschwindigkeit wird die Reinigungswirkung bezüglich der Ablagerung auf der Membran verringert.

Dies führt dazu, daß trotz Erhöhung des Gegendruckes bereits nach kurzer Betriebsdauer der Permeatdurchsatz stark abnimmt.

Aus der DE-A-25 06 039 ist ein Verfahren und eine Einrichtung zur Blutdialyse bekannt, bei der das Blut durch eine an die Blutseite (entsprechend der Konzentratseite) angrenzende Kammer hindurchgeleitet wird und das Dialysat (entsprechend dem Permeat) dank einer Druckdifferenz zwischen höherem Druck auf der Blutseite und geringerem Druck auf der Dialysatseite durch den Filter hindurchgedrückt wird. Dabei wird zur Vorbeiführung des Bluts auf der Blutseite des Filters eine Pumpe am Eingang des Filters und ein Ventil am Ausgang des Filters verwendet, um somit den Druck auf der Blutseite des Dialysegeräts einstellen zu können.

Über die Bauart dieser Pumpe, die das Blut auf der Blutseite des Filters vorbeiführt, ist keine Aussage gemacht. Auch über die Funktionsweise des Ventils, durch welche das Blut von der Blutseite des Filters wieder abfließt, ist keine Aussage gemacht. Auf der Dialysatseite des Filters wird eine Dialysatflüssigkeit vorbeigepumpt. Hierzu ist folgende Reihenschaltung gewählt: erste Pumpe - Druckminderer - Dialysatseite des Filters - Druckverstärker - zweite Pumpe. Bezüglich der ersten Pumpe und der zweiten Pumpe ist gesagt, daß diese vorzugsweise Verdrängungspumpen oder Pumpen konstanten Volumens sind, die ohne oder weitgehend ohne Druckabfall betrieben werden können und die im Betrieb eine im wesentlichen konstante Volumenströmung aufweisen. Bezüglich des Druckminderers ist gesagt, daß dieser ein Ventil oder eine Pumpe sein könne, während der Druckverstärker eine Pumpe sein soll. Der Druckminderer und der Druckverstärker steuern zusammen den Druck auf der Dialysatseite des Dialysegeräts (Permeatseite) so, daß der Permeatdurchgang durch den Filter beschränkt bleibt.

Es ist Aufgabe der Erfindung, bei einem Verfahren der eingangs genannten Art einen gleichbleibenden möglichst hohen Permeatdurchsatz trotz der Ablagerung auf der Konzentratseite des Filters zu erzielen.

Gelöst wird diese Aufgabe dadurch, daß eine Konzentratseitige Verdrängerpumpe verwendet wird, welche bei einer bestimmten Drehzahl unabhängig vom Gegendruck annähernd konstante Förderleistung erbringt, und daß der Gegendruck mit Hilfe des Konzentratseitigen Gegendruckventils mit zunehmender Betriebszeit erhöht wird.

Es hat sich gezeigt, daß durch die erfindungsgemäße Verwendung einer Verdrängerpumpe und eines während der Betriebszeit je nach Bedarf kontrolliert erhöhbaren Gegendrucks erhebliche Vorteile zu erzielen sind. Man kann den Gegendruck mit zunehmender Betriebszeit erhöhen, um auf diese Weise die Transfilterdruckdifferenz zu erhöhen und damit trotz des erhöhten Durchflußwiderstandes des Filters den Permeatdurchfluß wenigstens annähernd zu erhalten. Dank der Vestiendung einer Verdrängerpumpe kann dabei die Durchflußmenge in der Strömungsstrecke auf der Konzentratseite des Filters annähernd konstant gehalten oder sogar erhöht werden, weil die Fördermenge der Verdrängerpumpe eine im wesentlichen nur von der Drehzahl abhängige, aufgeprägte Größe ist, die bei steigendem Gegendruck nicht wesentlich abfällt. Je nach Typ der zum Einsatz kommenden Pumpe ist ein gewisser Abfall an Förderleistung mit steigendem Gegendruck denkbar. Diese Abnahme an Fördermenge läßt sich aber bei Wunsch jederzeit durch entsprechende Drehzahlerhöhung im Antrieb der Konzentratseitigen Förderpumpe korrigieren. Dies bedeutet nun, angewandt auf das erfindungsgemäße Verfahren, daß bei steigendem Gegendruck die Strömungsgeschwindigkeit an der von der Flüssigkeit beströmten Konzentratseite des jeweiligen Filters im wesentlichen konstant bleibt oder sogar erhöht wird und damit die Ansammlung von gelosten, suspendierten oder emulgierten Bestandteilen an der Oberfläche auf der Konzentratseite des Filters in Grenzen bleibt. Auf diese Weise läßt es sich ermöglichen, über relativ lange Betriebszeiten von beispielsweise 16 Stunden mit einem gleichbleibenden Flüssigkeitsdurchsatz durch die jeweilige Filtereinheit zu arbeiten und damit über diese lange Betriebszeit einen hohen Permeatdurchgang aufrechtzuerhalten.

Dieses vorteilhafte Ergebnis steht im Gegensatz zu bekannten Verfahren, bei denen man , wie oben schon festgestellt, Kreiselpumpen verwendet hat. Bei Kreiselpumpen könnte man zwar grundsätzlich auch den Gegendruck am Ausfluß der jeweiligen Filtereinheit erhöhen. Eine Erhöhung des Gegendrucks würde aber dann aufgrund der den Kreiselpumpen eigenen Charakteristik bedeuten, daß die Durchflußmenge auf der einen, von der Flüssigkeit beströmten Konzentratseite des Filters rasch abfällt. Dies würde dazu führen, daß die von der Durchströmungsmenge oder von der Strömungsgeschwindigkeit an der Konzentratseite des Filters abhängige Reinigungswirkung ebenfalls rasch abfällt. Als Folge hiervon geht die Filtrationsleistung insgesamt nach sehr viel kürzerer Betriebsdauer herunter.

Es ist bei Filtrationsverfahren der hier betrachteten Art auch schon bekannt, an einer zwischen einer Flüssigkeitszuführung und einem Konzentratablauf verlaufenden Basisleitung von der Flüssigkeitszuführung zum Konzentratablauf hin nacheinander mehrere Filtrationskreisläufe mit jeweils einer Kreiselpumpe und einer Filtereinheit vorzusehen und in der Basisleitung hinter dem Anschluß des letzten Filtrationskreislaufs ein Ablaufventil vorzusehen. Dabei war aber keine Durchflußwiderstandserhöhung des Ablaufventils mit zunehmender Betriebszeit vorgesehen sondern eine Durchflußregelung, die durch Relativeinstellung eines an der Zuführungsstelle angeordneten Ventils und des am Konzentratablauf vorgesehenen Ventils für eine Konstanthaltung des Verhältnisses von Flüssigkeitszulaufmenge zu Konzentratablaufmenge sorgen sollte. Bei dieser bekannten Verfahrensweise hat man in dem letzten Filtrationskreislauf bereits eine Verdrängerpumpe eingesetzt im Hinblick auf die dort stark erhöhte Viskosität, welche über dem von Kreiselpumpen beherrschbaren Viskositätswert lag.

Ein besonderer Aspekt der Erfindung ist es deshalb, Flüssigkeiten in erfindungsgemäßer Weise, d. h. mit Verdrängerpumpe und steigendem Gegendruck zu behandeln, deren Viskosität den Einsatz einer Kreiselpumpe an sich noch gestatten würde, jedoch zu den oben beschriebenen Nachteilen führen würde.

Insbesondere wird das erfindungsgemäße Verfahren vorgeschlagen zur Behandlung von Flüssigkeiten, deren Viskosität unter ca. 500 mPa.s liegt und vorzugsweise in einem Bereich zwischen ca. 300 mPa.s und ca. 50 mPa.s.

Bei dem erfindungsgemäßen Verfahren können als Filter Mikrofiltrationsmembranen verwendet werden, beispielsweise solche, deren Porenweite in der Größenordnung von ca. 0,2 bis 10 $\mu$m liegt.

Weiter können als Filter auch Ultrafiltrationsmembranen verwendet werden, beispielsweise solche, deren Trenngrenze kleiner als 100 000 Dalton ist. Hier sei bemerkt, daß die Angabe einer Trenngrenze in Dalton bedeutet, daß Moleküle mit einem Molekulargewicht größer als der jeweils angegebene Dalton-Wert von der Membran zurückgehalten werden.

Insbesondere ist das erfindungsgemäße Verfahren zur Aufkonzentrierung von gesäuerter Milch geeignet, deren pH-Wert beispielsweise ca. 4,5 bis ca. 6,7 und insbesondere ca. 4,5 bis 5,5 beträgt. Gesäuerte Milch wird in großtechnischem Maßstab in der Molkerei aufkonzentriert, insbesondere als Grundlage für die Käseproduktion. In der Käseproduktion hatte man bei Anwendung der bisherigen Verfahren mit Kreiselpumpe mit folgendem Problem zu rechnen: Nach einer gewissen Betriebszeit waren die eingesetzten Filter so weit durch die in der Milch gelösten, emulgierten und suspendierten Stoffe belegt, daß der transmembrane Flüssigkeitsdurchgang stark abfiel. Als Folge hiervon ging der Konzentratanfall am Konzentratabfluß stark zurück. Andererseits sind nun dem Konzentratabfluß Weiterbearbeitungsanlagen nachgeschaltet, die auf ein vorbestimmtes Konzentratangebot angewiesen sind. Wenn aber nun schon nach relativ kurzer Betriebszeit der in der Filtrationsanlage eingesetzte Filter mit einem Rückgang des Konzentratangebots gerechnet werden mußte, so gab es nur unbefriedigende Auswege. Man konnte den Betrieb nach entsprechend kurzer Betriebszeit abbrechen und die Filter reinigen. Dies bedeutet, daß man mit häufigen Betriebsunterbrechungen und damit insgesamt geringerer Wirtschaftlichkeit rechnen mußte. Man konnte weiter zusätzliche Filter einschalten; dies bedeutete die Notwendigkeit der Bereitstellung zusätzlicher aufwendiger Filtereinrichtungen. Schließlich konnte man das Konzentrat grundsätzlich über einen Speichertank führen und durch die Speicherung eine Vergleichmäßigung des Konzentratangebots herbeiführen. Dies bedeutete zusätzlichen Aufwand für die Bereitstellung des Speichers und hatte überdies den Nachteil, daß nicht mit einem gleichmäßigen Angebot von gleichmäßig frischem Konzentrat gerechnet werden konnte.

Das erfindungsgemäße Verfahren läßt sich weiterhin dahin ausbauen, daß auf der Permeatseite des jeweiligen Filters, ein einstellbarer Gegendruck aufrechterhalten wird. Dieser Gedanke ist an sich grundsätzlich bekannt aus der GB-A-1 492 090, wo man bereits auf beiden Seiten des Filters einander entsprechende Druckabfälle aufrechterhalten hat, um die transmembrane Druckdifferenz zu vergleichmäßigen. Durch diese Maßnahme wird es möglich, den Absolutwert des Drucks auf der von der Flüssigkeit durchströmten Konzentratseite des Filters entsprechend dem Erfindungsvorschlag auf Werte zu erhöhen, die andernfalls zu einer übermäßigen mechanischen Belastung und ggf. zur Zerstörung des Filters führen könnten.

Um einen größenordnungsmäßigen Anhaltspunkt zu geben: Mit dem erfindungsgemäßen Verfahren wird es möglich, eine Filtrationsanlage für angesäuerte Milch ohne Zuschaltung von Zusatzfiltern und ohne Puffereinrichtung über eine Betriebszeit von 16 Stunden zu betreiben, während nach dem bisherigen Verfahren mit Kreiselpumpe auch bei Einsatz von Zusatzfiltern und/oder Pufferspeichern Betriebszeiten über 7 Stunden kaum zu erreichen waren.

Die Erfindung betrifft weiter eine Filtrationseinrichtung, umfassend mindestens eine Filtereinheit mit einem Filter, einem eine Konzentratseitige Strömungsstrecke entlang des Filters definierenden Konzentratseitigen Durchflußraum auf der einen Seite d.h. der Konzentratseite des Filters und einem Permeatsammelraum auf der anderen Seite d.h. der Permeatseite des Filters, eine einem Eingang des Konzentratseitigen Durchflußraums vorgeschaltete Pumpe und ein einem Ausgang des Konzentratseitigen Durchflußraums nachgeschaltetes Gegendruckventil. Im Hinblick auf die Verlängerung der möglichen Betriebsdauer einer solchen Filtrationseinrichtung wird vorgeschlagen, daß die Konzentratseitige Pumpe eine Verdrängerpumpe ist und daß der Durchflußwiderstand des Konzentratseitigen Gegendruckventils zeitabhängig variabel ist. Dabei kann ein Programmgeber vorgesehen sein, um den Durchflußquerschnitt des Konzentratseitigen Gegendruckventils während einer Betriebsperiode kontinuierlich oder diskontinuierlich zu erhöhen entsprechend dem oben erwähnten Verfahrensablauf. Natürlich ist es auch denkbar, den Durchflußwiderstand des Gegendruckventils manuell zu erhöhen.

Um etwaigen Fördermengenabfall der Verdrängerpumpe bei steigendem Gegendruck ggf. kompensieren zu können, wird weiter vorgeschlagen, daß die Verdrängerpumpe mit einem Antrieb von variabler Drehzahl verbunden ist.

Um bei steigendem Gegendruck die an dem jeweiligen Filter herrschende transmembrane Druckdifferenz in für den Filter erträglichen Grenzen zu halten, wird vorgeschlagen, daß an den Permeatsammelraum ein Permeatseitiges Druckerhaltungsventil angeschlossen ist. Dabei kann dieses Permeatseitige Druckerhaltungsventil natürlich auch wieder durch einen Programmgeber, insbesondere einen in Abhängigkeit von der Einstellung des Konzentratseitigen Gegendruckventils abhängigen Programmgeber gesteuert sein, so daß der Druck im Permeatsammelraum kontinuierlich oder stufenweise mit zunehmendem Widerstand des Konzentratseitigen Gegendruckventils erhöht wird.

In üblicher Weise können zwischen der Konzentratseitigen Verdrängerpumpe und dem Konzentratseitigen Gegendruckventil mehrere Filtereinheiten in Reihe oder parallel geschaltet sein. Insbesondere ist es auch möglich, daß zwischen der Konzentratseitigen Verdrängerpumpe und dem Konzentratseitigen Gegendruckventil mehrere Serienschaltungen von Filtereinheiten Parallel angeordnet sind.

Insbesondere bei Filtrationsanlagen für die Aufkonzentrierung von gesäuerter Milch ist es möglich, daß an eine gemeinsame, durchgehende Basisleitung mit einem Flüssigkeitszulauf und einem Konzentratablauf zwischen dem Flüssigkeitszulauf und dem Konzentratablauf mindestens ein Filtrationskreislauf mit einer Konzentratseitigen Verdrängerpumpe, einem Konzentratseitigen Gegendruckventil und mindestens einer zwischen der Druckseite der Konzentratseitigen Verdrängerpumpe und dem Konzentratseitigen Gegendruckventil liegenden Filtrationseinheit liegt, wobei der Durchsatz durch die Konzentratseitige Verdrängerpumpe größer ist als der Durchsatz des Flüssigkeitszulaufs, vorzugsweise ein mehrfaches von diesem. Dabei können wieder mehrere Filtrationskreisläufe nacheinander an der Basisleitung zwischen dem Flüssigkeitszulauf und dem Konzentratablauf liegen. Durch eine solche Anordnung von Filtrationskreisläufen hintereinander an einer Basisleitung kann eine stufenweise zunehmende Konzentrierung erzielt werden. Dabei ist es möglich, daß in mindestens einem Teil der Filtrationskreisläufe, vorzugsweise in jedem der Filtrationskreisläufe, zwischen einem Konzentratseitigen Zulauf und einem Konzentratseitigen Rücklauf mindestens ein Wärmeübertrager zur Regelung der Temperatur im jeweiligen Filtrationskreislauf (Stufentemperatur) eingebaut ist.

Bei einer Reihenschaltung von Filtereinheiten etwa innerhalb eines Filtrationskreislaufs können auf der Permeatseite aufeinanderfolgender Filtereinheiten Druckhalteventile unterschiedlichen Abflußwiderstands zugeordnet sein derart, daß der Druck in dem Permeatsammelkammern der aufeinanderfolgenden Filtereinheiten von der Konzentratseitigen Verdrängerpumpe zum Konzentratseitigen Gegendruckventil hin abnimmt entsprechend dem Strömungsdruckabfall in den hintereinandergeschalteten Strömungsstrecken. Eine solche Anordnung unterscheidet sich in vorteilhafter Weise von der Anordnung nach der GB-A-1 492 090 dadurch, daß sich die membranschonenden Druckdifferenzen mit wesentlich geringerem Anlagen- und Steuerungsaufwand aufrechterhalten lassen als dort.

Die beiliegenden Figuren erläutern die Erfindung anhand eines Ausführungsbeispiels. Es stellen dar:

Fig. 1

eine Übersicht über die Gesamtschaltung einer erfindungsgemäßen Filtrationseinrichtung;

Fig. 2, 3, 4 und 5

verschiedene Schaltungsmöglichkeiten von einzelnen Filtereinheiten.

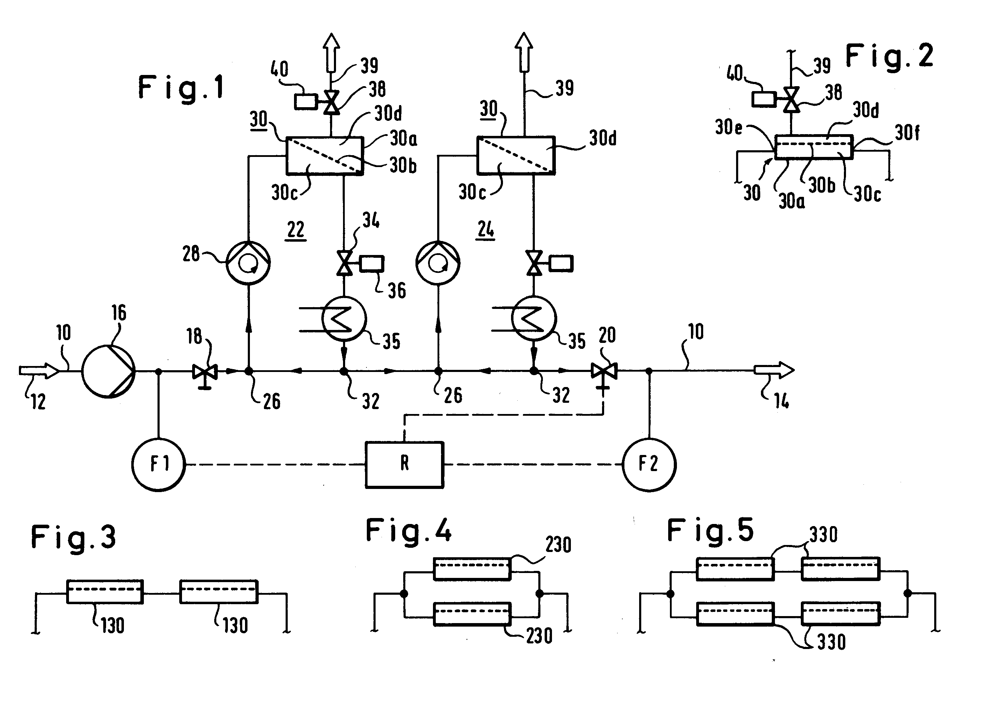

In Fig. 1 ist eine Basisleitung mit 10 bezeichnet; sie erstreckt sich zwischen einem Flüssigkeitszufluß 12 und einem Konzentratabfluß 14. Am Flüssigkeitszufluß 12 befindet sich eine Zulaufpumpe 16 und dieser unmittelbar nachgeschaltet ein Zuflußventil 18. Vor dem Konzentratabfluß befindet sich ein Abflußventil 20.

An der Basisleitung 10 sind nacheinander, im Beispielsfall zwei, Filtrationskreisläufe 22 und 24 angeschlossen. Es genügt zunächst, einen von ihnen zu erläutern, nämlich den Filtrationskreislauf 22. An die Abzweigung 26 von der Basisleitung 10 schließt sich eine Konzentratseitige Verdrängerpumpe 28 an, beispielsweise eine Drehkolbenpumpe. Anschließend an die Drehkolbenpumpe befindet sich eine Filtereinheit 30. Zwischen dem Ausgang der Filtereinheit 30 und der Wiedereinmündung 32 in die Basisleitung 10 befinden sich ein Konzentratseitiges Gegendruckventil 34 und ein Wärmeübertrager 35. Das Konzentratseitige Gegendruckventil 34 ist durch ein Steuer- oder Regelgerät 36 in seinem Durchflußwiderstand einstellbar.

Die Filtereinheit 30 ist im einfachsten Fall so aufgebaut, wie in Fig. 2 dargestellt. Sie umfaßt ein Filtergehäuse 30a, das durch einen Filter 30b in einen Konzentratseitigen Flüssigkeitsdurchfluß 30c und einen Permeatsammelraum 30d unterteilt ist. Die Anschlüsse des Kreislaufs 30e und 30f befinden sich im Bereich des Konzentratseitigen Flüssigkeitsdurchflußraums 30c. An den Permeatsammelraum 30d ist ein Druckerhaltungsventil 38 angeschlossen, das durch ein Steuer- oder Regelgerät 40 in seinem Durchflußwiderstand einstellbar ist.

In Fig. 3 ist eine Reihenschaltung von zwei Filtereinheiten 130 dargestellt, die im übrigen so aufgebaut sind wie die Filtereinheit 30 in Fig. 2. In Fig. 4 sind zwei Filtereinheiten 230 parallel geschaltet; sie sind wiederum so aufgebaut, wie in Fig. 2 gezeichnet und beschrieben. In Fig. 5 erkennt man eine Parallelschaltung von zwei Serienschaltungen mit insgesamt vier Filtereinheiten 330, die so aufgebaut sind, wie in Fig. 2 dargestellt.

Mit F1 ist ein stromaufwärtiger, mit F2 ein stromabwärtiger Volumenstromdurchflußmesser bezeichnet. Diese beiden Meßgeräte liegen an den Steuereingängen eines Reglers R, dessen Ausgang an dem Ausflußventil 20 liegt und den Durchflußquerschnitt des Ausflußventils 20 so einstellt, daß während der ganzen Betriebszeit das Durchflußmengenverhältnis am Flüssigkeitszulauf 12 und am Konzentratablauf 14 im wesentlichen konstant bleibt. Die bei 26 abgezogene Flüssigkeit wird durch die Konzentratseitige Verdrängerpumpe 28 durch den Flüssigkeitsdurchflußraum 30c der Filtereinheit 30 hindurchgefördert und bestreicht dabei den Filter oder die Membran 30b. Das Konzentratseitige Gegendruckventil 34 und das Druckerhaltungsventil 38 sind so eingestellt, daß bei Beginn einer Betriebsperiode an dem Filter 30 eine vorbestimmte transmembrane Druckdifferenz liegt, die einen Permeatdurchtritt durch den Filter 30b bewirkt. Die durchgehende Flüssigkeit gelangt über den Wärmeübertrager 35 in die Basisleitung 10 zurück. Hier ist anzumerken, daß die Förderleistung der Konzentratseitigen Verdrängerpumpe 28 und der Durchflußwiderstand des Gegendruckventils 34 so eingestellt sind, daß durch den Filtrationskreislauf 22 eine wesentlich größere Fördermenge pro Zeiteinheit zirkuliert, als durch die Zuflußpumpe 16 Flüssigkeit aufgegeben wird. Der in den Kreislauf eingebaute Wärmeübertrager 35 dient zur Regelung der Temperatur der zirkulierenden Flüssigkeit.

Mit zunehmender Betriebszeit lagern sich an der Membran 30b gelöste, suspendierte und emulgierte Stoffe ab trotz der Reinigungswirkung, welche die durch den Durchflußraum 30c und im wesentlichen parallel zur Membran 30b strömende Flüssigkeit ausübt. Um nun trotz dieser Ablagerungen den Permeatdurchfluß wenigstens annähernd zu erhalten, wird die Druckdifferenz zwischen dem Konzentratseitigen Durchflußraum 30c und dem Permeatsammelraum 30d nach und nach erhöht. Diese Erhöhung geschieht durch entsprechende Vergrößerung des Durchflußwiderstands des Konzentratseitigen Gegendruckventils 34. Wenn dadurch die Fördermenge der Konzentratseitige Verdrängerpumpe 28 verringert werden sollte, was je nach Bauart der Verdrängerpumpe 28 der Fall sein könnte, so wird die Antriebsdrehzahl der Konzentratseitigen Verdrängerpumpe 28 so erhöht, daß die Durchflußmenge durch den Konzentratseitigen Durchflußraum 30c annähernd konstant bleibt. Die Reinigungswirkung auf die Ablagerungen an der Membran 30b bleibt also während des ganzen Verfahrens erhalten. Die Ansteuerung des Konzentratseitigen Gegendruckventils 34 kann in Abhängigkeit von dem Permeatanfall in der Permeatableitung 39 geschehen, um für einen konstanten Permeatstrom oder ein bestimmtes Programm des Permeatstroms 39 während einer Betriebsperiode zu sorgen.

Sind mehrere Filtereinheiten 130 hintereinandergeschaltet, so wie in Fig. 3 bzw. Fig. 5 dargestellt, so bedeutet dies, daß in den hintereinandergeschalteten Durchflußräumen 30c von Filtereinheit zu Filtereinheit ein Druckabfall stattfindet. In diesem Fall können die Gegendruckventile 38 aufeinanderfolgender Filtereinheiten 130 bzw. 330 auf zum Konzentratseitigen Gegendruckventil 34 hin abnehmenden Druck eingestellt werden, so daß an sämtlichen Filtern der Reihenschaltung trotz des Druckabfalls in der durchströmenden Flüssigkeit jeweils eine annähernd konstante transmembrane Druckdifferenz aufrechterhalten wird.

Die Verhältnisse in dem zweiten Filtrationskreislauf 24 sind entsprechend. Jedoch nimmt die Viskosität von Filtrationskreislauf zu Filtrationskreislauf zu.

Ausführungsbeispiel:

Durch den Flüssigkeitszulauf 12 wird von der Zulaufpumpe 16 eine Fördermenge von 1000 l angesäuerter Milch (pH-Wert ca. 5) aufgenommen. Am Konzentratablauf fällt Konzentrat in einer Menge von 500 1/h an.

Die Durchflußmenge durch den Filtrationskreislauf 22 ist 10 000 l/h. Bei Beginn des Verfahrens ist der Druck am Eingang des Durchflußraumes 30c ca. 3 bar und der Druck in dem Permeatsammelraum 30d ca. 1 bar.

In dem Filtrationskreislauf 24 ist die Umwälzmenge ca. 10 000 l/h. Der Druck am Eingang des Durchflußraumes 30c ist zu Beginn der Betriebsperiode ca. 5 bar und der Druck im Permeatsammelraum 1 bar (atmosphärischer Druck).

Die Drücke am Eingang der Konzentratseitigen Durchflußräume 30c werden während einer Betriebsperiode von ca. 16 Stunden stetig erhöht bis auf Werte von ca. 8 bar in dem Konzentratseitigen Durchflußraum 30c des Filtrationskreislaufs 22 und von ca. 10 bar in dem Konzentratseitigen Durchflußraum 30c des Filtrationskreislaufs 24. Der Permeatabfluß durch die beiden Leitungen 39 beträgt pro Stunde in beiden Filtrationskreisläufen 22 und 24 ca. 250 l. Als Filter werden Ultrafiltrationsmembranen verwendet. Nach einer Betriebsperiode von 16 Stunden wird der Betrieb unterbrochen und die Anlage entleert und gereinigt.

**Patentansprüche**

**1.** Filtrationsverfahren, bei dem eine der Filtration zu unterwerfende, gelöste, suspendierte oder emulgierte Bestandteile enthaltende Flüssigkeit zwischen einer Konzentratseitigen Pumpe (28) und einem Konzentratseitigen Gegendruckventil (34) durch eine Konzentratseitige Strömungsstrecke (30c) entlang der Konzentratseite des Filters (30b) mindestens einer Filtereinheit (30) bewegt wird und zwischen dieser Konzentratseite (30c) des Filters und der anderen Seite (30d) d.h. der Permeatseite (30d) des Filters eine Transfilterdruckdifferenz aufrechterhalten wird, so daß während des Vorbeigangs der zu filtrierenden Flüssigkeit an der Konzentratseite (30c) des Filters (30b) ein Teil der Flüssigkeit als Permeat durch den Filter (30b) hindurchtritt und wenigstens ein Teil der gelösten, suspendierten oder emulgierten Bestandteile an der Konzentratseite (30c) des Filters (30b) abgelagert wird,
dadurch gekennzeichnet,
daß eine Konzentratseite Verdrängerpumpe (28) verwendet wird, welche bei einer bestimmten Drehzahl unabhängig vom Gegendruck annähernd konstante Förderleistung erbringt und daß der Gegendruck auf der Konzentratseite (30c) mit Hilfe des Konzentratseitigen Gegendruckventils (34) mit zunehmender Betriebszeit erhöht wird.

**2.** Verfahren nach Anspruch 1,
dadurch gekennzeichnet,
daß die Strömungsgeschwindigkeit an der Konzentratseite (30c) konstant gehalten oder mit zunehmender Betriebszeit erhöht wird.

**3.** Verfahren nach Anspruch 1 oder 2, dadurch gekennzeichnet, daß eine Flüssigkeit behandelt wird, deren Viskosität den Einsatz einer Kreiselpumpe gestatten würde.

**4.** Verfahren nach einem der Ansprüche 1 bis 3, dadurch gekennzeichnet, daß eine Flüssigkeit behandelt wird, deren Viskosität unter ca. 500 mPa.s liegt, vorzugsweise in einem Bereich zwischen ca. 300 und ca. 50 mPa.s.

**5.** Verfahren nach einem der Ansprüche 1 bis 4, dadurch gekennzeichnet, daß als Filter (30b) eine Mikrofiltrationsmembran mit einer Porenweite in der Größenordnung von ca. 0,2 bis 10 Mikron verwendet wird.

**6.** Verfahren nach einem der Ansprüche 1 bis 4, dadurch gekennzeichnet, daß als Filter (30b) eine Ultrafiltrationsmembran verwendet wird.

**7.** Verfahren nach Anspruch 6, dadurch gekennzeichnet, daß eine Ultrafiltrationsmembran mit einer Trenngrenze < 100 000 Dalton verwendet wird.

8. Verfahren nach einem der Ansprüche 1 bis 7, dadurch gekennzeichnet, daß gesäuerte Milch aufkonzentriert wird.

9. Verfahren nach Anspruch 8, dadurch gekennzeichnet, daß gesäuerte Milch mit einem pH-Wert von ca. 4,5 bis ca. 6,7, vorzugsweise ca. 4,5 bis 5,5 aufkonzentriert wird.

10. Verfahren nach einem der Ansprüche 1 bis 9, dadurch gekennzeichnet, daß auf der Permeatseite (30d) mit Hilfe eines Druckhalteventils (38) ein einstellbarer Gegendruck aufrechterhalten wird.

11. Filtrationseinrichtung, umfassend mindestens eine Filtereinheit (30) mit einem Filter (30b), einem eine Konzentratseitige Strömungsstrekke entlang des Filters (30b) definierenden Durchflußraum (30c) auf der einen Seite d.h. der Konzentratseite des Filters (30b) und einem Permeatsammelraum (30d) auf der Permeatseite des Filters (30b), eine einem Eingang des Konzentratseitigen Durchflußraums (30c) vorgeschaltete Konzentratseitige Pumpe (28) und ein einem Ausgang des Konzentratseitigen Durchflußraums (30c) nachgeschaltetes Konzentratseitiges Gegendruckventil (34), dadurch gekennzeichnet, daß die Konzentratseitige Pumpe (28) eine Verdrängerpumpe ist und daß der Durchflußwiderstand des Konzentratseitigen Gegendruckventils (34) zeitabhängig variabel ist.

12. Filtrationseinrichtung nach Anspruch 11, dadurch gekennzeichnet, daß die Konzentratseitige Verdrängerpumpe (28) mit einem Antrieb von variabler Drehzahl verbunden ist.

13. Filtrationseinrichtung nach einem der Ansprüche 11 und 12, dadurch gekennzeichnet, daß an den Permeatsammelraum (30d) ein Druckerhaltungsventil (38) angeschlossen ist.

14. Filtrationseinrichtung nach einem der Ansprüche 11 bis 13, dadurch gekennzeichnet, daß zwischen der Konzentratseitigen Verdrangerpumpe (28) und dem Konzentratseitigen Gegendruckventil (34) mehrere Filtereinheiten (130, 230, 330) in Reihe und/oder parallel geschaltet sind.

15. Filtrationseinrichtung nach Anspruch 14, dadurch gekennzeichnet, daß zwischen der Konzentratseitigen Verdrängerpumpe (28) und dem Konzentratseitigen Gegendruckventil (34) mehrere Serienschaltungen (330 - 330) von Filtereinheiten parallel angeordnet sind.

16. Filtrationseinrichtung nach einem der Ansprüche 11 bis 15, dadurch gekennzeichnet, daß an eine gemeinsame durchgehende Basisleitung (10) mit einem Flüssigkeitszulauf (12) und einem Konzentratablauf (14) zwischen dem Flüssigkeitszulauf (12) und dem Konzentratablauf (14) mindestens ein Filtrationskreislauf (22) mit einer Konzentratseitigen Verdrängerpumpe (28), einem Konzentratseitigen Gegendruckventil (34) und mindestens einer zwischen der Druckseite der Konzentratseitigen Verdrängerpumpe (28) und dem Konzentratseitigen Gegendruckventil (34) liegenden Filtrationseinheit (30) liegt, wobei der Durchsatz durch die Konzentratseitigen Verdrängerpumpe (28) größer ist als der Durchsatz des Flüssigkeitszulaufs (12), vorzugsweise ein mehrfaches von diesem.

17. Filtrationseinrichtung nach Anspruch 16, dadurch gekennzeichnet, daß mehrere Filtrationskreisläufe (22, 24) nacheinander an der Basisleitung (10) zwischen dem Flüssigkeitszulauf (12) und dem Konzentratablauf (14) liegen.

18. Filtrationseinrichtung nach einem der Ansprüche 11 bis 17, dadurch gekennzeichnet, daß in Reihe mit dem Durchflußraum (30c) mindestens ein Wärmeübertrager (35) vorgesehen ist.

19. Filtrationseinrichtung nach Anspruch 18, dadurch gekennzeichnet, daß in mindestens einem Teil der Filtrationskreisläufe (22, 24), vorzugsweise in jedem der Filtrationskreisläufe (22, 24), zwischen einem Zulauf (Abzweigung 26) und einem Rücklauf (Wiedereinmündung 32) mindestens ein Wärmeübertrager (35) zur Regelung der Temperatur im jeweiligen Filtrationskreislauf (Stufentemperatur) eingebaut ist.

20. Filtrationseinrichtung nach einem der Ansprüche 14 bis 19, dadurch gekennzeichnet, daß in einer Reihenschaltung von Filtereinheiten (330) aufeinanderfolgenden Filtereinheiten (330) Druckhalteventile (38) unterschiedlichen Abflußwiderstands zugeordnet sind derart, daß der Druck in den Permeatsammelkammern (30d) der aufeinanderfolgenden Filtereinheiten (330) von der jeweiligen Konzentratseitigen Verdrängerpumpe (28) zum jeweiligen Konzentratseitigen Gegendruckventil (34) hin abnimmt entsprechend dem Strömungsdruckabfall in den hintereinandergeschalteten Strömungsstrecken.

## Claims

1. A filtration process in which a liquid containing dissolved suspended or emulsified constituents and which is to be subjected to filtration is moved between a pump (28) on the concentrate side and a back-pressure valve (34) on the concentrate side through a flow path (30c) on the concentrate side along the concentrate side of the filter (30b) to at least one filtering unit (30) and in that a transfilter pressure differential is maintained between this concentrate side (30c) of the filter and the other side (30d), in other words the permeate side (30d) of the filter so that during passage of the liquid which is to be filtered through the concentrate side (30c) of the filter (30b), part of the liquid passes as a permeate through the filter (30b) while at least a part of the dissolved suspended or emulsified constituents are deposited on the concentrate side (30c) of the filter (30b), characterised in that a displacement pump (28) is used on the concentrate side which at a predetermined rotary speed and independently of the back-pressure produces approximately constant delivery performance and in that the back-pressure on the concentrate side (30c) is by means of the back-pressure valve (34) on the concentrate side increased with increasing operating time.

2. A method according to Claim 1, characterised in that the flow velocity on the concentrate side (30c) is maintained constant or is increased with increasing operating time.

3. A method according to Claim 1 or 2, characterised in that a liquid is treated the viscosity of which would allow the use of a centrifugal pump.

4. A method according to one of Claims 1 to 3, characterised in that the liquid is treated the viscosity of which is below approx. 500 mPa.s and is preferably in a range between approx. 300 and approx. 50 mpA.s.

5. A method according to one of Claims 1 to 4, characterised in that as a filter (30b) a microfiltration membrane is used which has a pore size of the order of about 0.2 to 10 microns.

6. A method according to one of Claims 1 to 4, characterised in that an ultrafiltration membrane is used as the filter (30b).

7. A method according to Claim 6, characterised in that an ultrafiltration membrane with a separation limit of less than 100,000 daltons is used.

8. A method according to one of Claims 1 to 7, characterised in that acidulated milk is concentrated.

9. A method according to Claim 8, characterised in that acidulated milk with a pH value of approx. 4.5 to approx. 6.7 and preferably approx. 4.5 to 5.5 is concentrated.

10. A method according to one of Claims 1 to 9, characterised in that on the permeate side (30d) an adjustable back-pressure is maintained by means of a pressure maintaining valve (38).

11. A filtration apparatus comprising at least one filter unit (30) with a filter (30b), a through-flow space (30c) defining on the concentrate side a flow path along the filter (30b) on one side, i.e. the concentrate side, of the filter (30b) and a permeate collecting space (30d) on the permeate side of the filter (30b) and preceding the input to the through-flow space (30c) on the concentrate side a pump (28) on the concentrate side and, on the downstream side of an outlet from the through-flow space (30c) on the concentrate side a back-pressure valve (34) on the concentrate side, characterised in that the pump (28) on the concentrate side is a displacement pump and in that the through-flow resistance of the back-pressure valve (34) on the concentrate side is variable as a function of the time.

12. A filtration apparatus according to Claim 11, characterised in that the displacement pump (28) on the concentrate side is connected to a variable speed drive.

13. A filtration apparatus according to one of Claims 11 and 12, characterised in that a pressure maintaining valve (38) is connected to the permeate collecting space (30d).

14. A filtration apparatus according to one of Claims 11 to 13, characterised in that between the displacement pump (28) on the concentrate side and the back-pressure valve (34) on the concentrate side there are a plurality of filter units (130, 230, 330) which are connected in series and/or in parallel.

15. A filtration apparatus according to Claim 14, characterised in that between the displacement pump (38) on the concentrate and the back-pressure valve (34) on the concentrate side there are a plurality of parallel arrangements (330 - 330) of filter units.

16. A filtration apparatus according to one of Claims 11 to 15, characterised in that at least one filtration circuit (22) with a displacement pump (28) on the concentrate side, a back-pressure valve (34) on the concentrate side and, disposed between the outlet side of the displacement pump (28) on the concentrate side and the back-pressure valve (34) on the concentrate side there is connected to a common continuous base line (10) with a fluid feed (12) and a concentrate discharge (14) between the fluid feed (12) and the concentrate outlet (14) at least one filtration circuit (22), the throughput through the displacement pump (28) on the concentrate side being greater than the throughput of the liquid feed (12) and is preferably a multiple thereof.

17. A filtration apparatus according to Claim 16, characterised in that a plurality of filtration circuits (20, 24) are connected serially to the base line (10) between the liquid feed (12) and the concentrate discharge (14).

18. A filtration apparatus according to one of Claims 11 to 17, characterised in that at least one heat transfer device (35) is provided in series with the through-flow space (30c).

19. A filtration apparatus according to Claim 18, characterised in that in at least one part of the filtration circuits (22, 24), preferably in each of the filtration circuits (22, 24), between a feed (branch 26) and a return (renewed entry 32) there is at least one heat transfer device (35) to regulate the temperature in the respective filtration circuit (step temperature).

20. A filtration apparatus according to one of Claims 14 to 19, characterised in that in a series connection of filter units (330) there are associated with successive filter units (330) pressure holding valves (38) of various outflow resistance, so that the pressure in the permeate collecting chambers (30d) of the successive filter units (330) of whichever is the concentrate side displacement pump (28) diminishes in the direction of the relevant concentrate side back-pressure valve (34) according to the drop in flow pressure in the serially connected flow paths.

## Revendications

1. Procédé de filtration dans lequel un liquide, à soumettre à la filtration, contenant des constituants dissous, en suspension ou en émulsion, est transporté entre une pompe (28) côté concentré et une vanne de contre-pression (34) côté concentré, à travers un parcours d'écoulement (30c) côté concentré, le long du côté du concentré du filtre (30b) d'au moins une unité à filtre (30) et dans lequel il est maintenu, entre ce côté (30c) du filtre et l'autre côté (30d), c'est-à-dire le côté perméat du filtre, une différence de pression à travers le filtre telle que pendant le passage du liquide à filtrer sur le côté concentré (30c) du filtre (30b), une partie du liquide traverse le filtre (30b) sous la forme d'un perméat et une partie au moins des constituants dissous, en suspension ou en émulsion est déposée sur le côté concentré (30c) du filtre (30b), caractérisé en ce qu'une pompe volumétrique (28) côté concentré est utilisée pour une vitesse de rotation donnée et qui, indépendamment de la contre-pression, possède un débit à peu près constant et en ce que la contre-pression sur le côté concentré (30c) est augmentée, à l'aide de la vanne de contre-pression (34) au fur et à mesure qu'augmente le temps de fonctionnement.

2. Procédé selon la revendication 1, caractérisé en ce que la vitesse d'écoulement sur le côté concentré (30c) est maintenue constante ou augmente au fur et à mesure qu'augmente le temps de fonctionnement.

3. Procédé selon la revendication 1 ou 2, caractérisé en ce qu'il est traité un liquide dont la viscosité autoriserait l'emploi d'une pompe centrifuge.

4. Procédé selon l'une des revendications 1 à 3, caractérisé en ce qu'il est traité un liquide dont la viscosité est inférieure à 500 mPa.s environ, située de préférence entre 300 et 50 mPa.s environ.

5. Procédé selon l'une des revendications 1 à 4, caractérisé en ce qu'on utilise code filtre (30b) une membrane de microfiltration d'une largeur de pore de l'ordre de 0,2 à 10 microns environ.

6. Procédé selon l'une des revendications 1 à 4, caractérisé en ce qu'on utilise comme filtre (30b) une membrane d'ultrafiltration.

7. Procédé selon la revendication 6, caractérisé en ce qu'on utilise une membrane d'ultrafiltration avec une limite de séparation inférieur à 100 000 daltons.

8. Procédé selon l'une des revendications 1 à 7, caractérisé en ce qu'on concentre du lait acidulé.

9. Procédé selon la revendication 8, caractérisé en ce qu'on concentre du lait acidulé avec un pH compris entre 4,5 et 6,7 environ, de préférence entre 4,5 et 5,5 environ.

10. Procédé selon l'une des revendications 1 à 9, caractérisé en ce que sur le côté perméat (30d) il est maintenu une contre-pression réglable, à l'aide d'une vanne de maintien de pression (38).

11. Dispositif de filtration comportant au moins une unité à filtre (30) avec un filtre (30b), un volume de passage (30c), définissant un parcours d'écoulement côté concentré le long du filtre (30b), sur un côté, c'est-à-dire le côté concentré, du filtre (30b) et un volume de collecte de perméat (30d) sur le côté perméat du filtre (30b), comportant une pompe (28) côté concentré, montée en amont de l'entrée du volume de passage (30c) côté concentré ainsi qu'une vanne de contre-pression (34), côté concentré, située en aval d'une sortie du volume de passage (30c), côté concentré, caractérisé en ce que la pompe (28) côté concentré est une pompe volumétrique et en ce que la résistance au passage de la vanne de contre-pression (34) côté concentré est variable en fonction du temps.

12. Dispositif de filtration selon la revendication 11, caractérisé en ce que la pompe volumétrique (28) côté concentré est reliée à un mécanisme d'entraînement à vitesse variable.

13. Dispositif de filtration selon l'une des revendications 11 et 12, caractérisé en ce qu'une vanne de maintien de pression (38) est raccordée au volume de collecte de perméat (30d).

14. Dispositif de filtration selon l'une des revendications 11 à 13, caractérisé en ce que plusieurs unités à filtre (130, 230, 330) sont montées en série et/ou en parallèle, entre la pompe volumétrique (28) côté concentré et la vanne de contre-pression (34) côté concentré.

15. Dispositif de filtration selon la revendication 14, caractérisé en ce que plusieurs montages en série (330-330) d'unités à filtre sont montés en parallèle entre la pompe volumétrique (28) côté concentré et la vanne de contre-pression (34) côté concentré.

16. Dispositif de filtration selon l'une des revendications 11 à 15, caractérisé en ce qu'il est prévu sur une conduite de base (10) continue commune, avec une arrivée de liquide (12) et une sortie de concentré (14), entre l'arrivée de liquide (12) et la sortie de concentré (14), au moins un circuit de filtration (22) avec une pompe volumétrique (28) côté concentré, une vanne de contrepression (34) côté concentré et au moins une unité à filtre (30), située entre le côté refoulement de la pompe volumétrique (28) côté concentré et la vanne de contrepression (34) côté concentré, le débit à travers la pompe de refoulement (28) côté concentré étant supérieur à celui de l'arrivée de liquide (12), de préférence un multiple de celui-ci.

17. Dispositif de filtration selon la revendication 16, caractérisé en ce qu'il est prévu plusieurs circuits de filtration (22, 24) successifs, sur la conduite de base (10), entre l'arrivée de liquide (12) et la sortie de concentré (14).

18. Dispositif de filtration selon l'une des revendications 11 à 17, caractérisé en ce qu'il est prévu au moins un dispositif de transmission de chaleur (35), en série avec le volume de passage (30c).

19. Dispositif de filtration selon la revendication 18, caractérisé en ce que dans une partie au moins des circuits de filtration (22, 24), de préférence dans chacun des circuits de filtration (22, 24), il est monté, entre une arrivée (départ 26) et un retour (nouveau débouché 32), au moins un dispositif de transmission de chaleur (35) afin de réguler la température dans le circuit de filtration respectif (paliers de température).

20. Dispositif de filtration selon l'une des revendications 14 à 19, caractérisé en ce que dans un montage en série d'unités à filtre (330), des vannes de maintien de pression (38), de résistance différente à l'écoulement, sont associées à des unités à filtre (330) successives de manière que la pression dans les chambres de collecte de perméat (30d) des unités à filtre successives (330) diminue depuis la pompe volumétrique (28) respective côté concentré vers la vanne de contre-pression (34) respective côté concentré, en fonction de la chute de pression d'écoulement dans les parcours d'écoulement montés les uns derrière les autres.

Fig.1  Fig.2  Fig.3  Fig.4  Fig.5